# EUROPEAN PATENT SPECIFICATION

(11) **EP 1 937 606 B1**
(45) Date of publication and mention of the grant of the patent: **10.07.2019**
(21) Application number: 06836269.8
(22) Date of filing: 12.10.2006
(51) Int. Cl.: C03B 35/14, C03B 35/20, C03B 23/025, C03B 23/035, C03B 27/04, C03B 27/044, C03B 23/03

(54) **GLASS SHEET FORMING METHOD**
VERFAHREN ZUR FORMUNG VON GLASSCHEIBEN
PROCEDE DE FORMATION D'UNE FEUILLE DE VERRE

(30) Priority: 21.10.2005 US 255531
(43) Date of publication of application: 02.07.2008
(73) Proprietor: Glasstech, Inc., Perrysburg, Ohio 43551 (US)
(72) Inventor: VILD, Michael, J., Toledo, OH 43606 (US); NITSCHKE, David, B., Perrysburg, OH 43551 (US); NITSCHKE, Dean, M., Maumee, OH 43537 (US); SCHNABEL, James, P., Jr., Holland, OH 43528 (US)
(74) Representative: Higgs, Jonathan
(86) International application number: PCT/US2006/039785
(87) International publication number: WO 2007/050297

(56) References cited:
- EP-A1- 0 183 418
- US-A- 4 204 853
- US-A- 4 252 552
- US-A- 4 666 493
- US-A- 4 767 437
- US-A- 4 767 437
- US-A- 5 441 551
- US-A- 6 038 887

## Description

### BACKGROUND OF THE INVENTION

### 1. Field of the Invention

This invention relates to a method for forming glass sheets.

### 2. Background Art

Glass sheets are conventionally formed by heating on a conveyor within a furnace and then forming within a heated chamber prior to delivery for cooling. Such cooling can be slow cooling to provide annealing or faster cooling that provides heat strengthening or tempering. In connection with heating of the glass sheets, see United States Patents: 3,806,312 McMaster et al.; 3,947,242 McMaster et al.; 3,994,711 McMaster; 4,404,011 McMaster; and 4,512,460 McMaster. In connection with glass sheet forming, see United States Patents: 4,282,026 McMaster et al.; 4,437,871 McMaster et al.; 4,575,390 McMaster; 4,661,141 Nitschke et al.; 4,662,925 Thimons et al.; 5,004,491 McMaster et al.; 5,330,550 Kuster et al.; 5,472,470 Kormanyos et al.; 5,900,034 Mumford et al.; 5,906,668 Mumford et al.; 5,925,162 Nitschke et al.; 6,032,491 Nitschke et al.; 6,173,587 Mumford et al.; 6,418,754 Nitschke et al.; 6,718,798 Nitschke et al.; and 6,729,160 Nitschke et al. In connection with the cooling, see United States Patents: 3,936,291 McMaster; 4,470,838 McMaster et al.; 4,525,193 McMaster et al.; 4,946,491 Barr; 5,385,786 Shetterly et al.; 5,917,107 Ducat et al.; and 6,079,094 Ducat et al.

During the forming process, the heated glass sheets can be supported by a vacuum generated at a downwardly facing mold whose initial support of the glass sheet upon being received from a heating conveyor can be assisted by an upwardly directed heated gas flow that can be provided by gas jet pumps, such as disclosed by United States Patents: 4,204,854 McMaster et al. and 4,222,763 McMaster.

For effective high yield glass sheet forming, it is important for cooperable molds to be properly positioned upon mounting and aligned with each other during each cycle of operation therebetween, which is made more difficult due to the heated environment in which the glass sheet forming takes place. See, United States Patents: 4,781,745 Mumford; 5,158,592 Buckingham; 5,092,916 McMaster; and 5,230,728 McMaster. The heated environment also makes it more difficult to change molds between different production runs that cannot utilize the same molds. See United States Patent 5,137,561 Schnabel, Jr. which discloses changing a cloth ring on a glass sheet heating furnace.

After forming, heat strengthening or tempering can be performed by rapid cooling at a quench section between lower and upper quench modules thereof and may have provision for transferring the glass sheet during such cooling by blowing a greater amount of gas upwardly so as to permit the associated quench ring that carries the glass sheet to move back to the heated forming station in preparation for the next cycle. See United States Patent 4,361,432 McMaster et al.

US 4,767,437 discloses a horizontal press bending arrangement for press bending heat softened glass sheets during transfer into a shaping station. The glass sheet is conveyed through a roller hearth or gaseous support hearth type furnace to heat the sheet to its heat deformable temperature. The sheet is then transferred beneath a vacuum/pressure pick-up to support the glass sheet in non-engaging contact therewith. The sheet is next deposited on a lower mold. The vacuum/pressure pick-up thereafter splits in two and moves out of the shaping station to allow the sheet to be shaped between a pair of vertically aligned shaping molds. After shaping the shaped sheet is removed for further processing, e.g., tempering.

EP 0 183 418 discloses a method and apparatus capable of forming a heated glass sheet to a deep, abrupt, or complex curvature are disclosed as utilizing a first curved mold that initially forms the glass sheet at a first forming station preferably by the operation of gravity. The initially formed glass sheet is moved horizontally preferably by movement on the first curved mold to a second forming station. A second curved mold of the second forming station engages the initially formed glass sheet to provide accurate forming preferably by downward movement of the second curved mold that provides the engagement thereof with the glass sheet. In the preferred construction disclosed, the heated glass sheet is transferred from a furnace conveyor to a topside conveyor for depositing onto the first curved mold, and a transfer conveyor transfers the formed glass sheet from the second curved mold to a quench station for tempering.

US 4,252,552 discloses shaping glass sheets by lifting a heat-softened glass sheet on a lower mold having an upwardly facing surface defining a given sharpness of bend and transferring said glass sheet by suction to an upper vacuum mold having a downwardly facing shaping surface defining a lesser sharpness of bend. Optionally, a ring-like member defining a sharpness of bend that may be equal to, less severe, or more severe than that defined by the upper vacuum mold moves between the molds when the latter are separated to impose a shape in the glass sheet that is correlated with the shape defined by the ring-like member. The ring-like member is used to support the glass sheet for rapid cooling if the glass sheet is to be tempered. Only the ring-like member need be changed when a change in production pattern is made.

US 4,204,853 discloses glass sheet alignment means and method of using the same. Glass sheets are brought into alignment with bending means while horizontally disposed by urging the glass sheets into contact with a contoured line of abutment. Some embodiments permit simultaneous aligning of a plurality of glass sheets side-by-side.

US 4,666,493 discloses a method for bending glass sheets. During the process, the hot glass sheet is picked up by a transfer platen, moved into the molding station and dropped there on a fiberglass cloth serving as the upper face of a lower mold. The position of the hot glass sheet on the fiberglass cloth is detected by sensors, as soon as the transfer platen moves out, and corrected accordingly to precisely conform to the positions of the upper and lower molds. Next, the glass is pressed between the molds, followed by lifting up the bent glass through sucking vacuum from the upper mold. Afterwards, a delivery mold is moving under the upper mold, receiving the plate and moving it out of the molding station. In the process of US 4,666,493, it is not foreseen that the transfer platen and the delivery mold are simultaneously in between the upper and lower molds because Fig. 1 of US 4,666,493 is expressively said to be an elevation view, leaving no space for the transfer platen and the delivery mold in between the upper and lower molds simultaneously.

### SUMMARY OF THE INVENTION

According to the present invention there is provided a method of forming glass sheets according to claim 1. Optional features are recited in dependent claims.

A glass sheet forming system includes a furnace having a heating chamber in which a horizontal conveyor is located to convey glass sheets through the furnace along a direction of conveyance for heating to a forming temperature. A forming station of the system cyclically forms heated glass sheets. The forming station includes a lower mold of the ring type and an upper mold located above the lower mold and having a downwardly facing full surface forming face at which a vacuum can be drawn. A transfer platen of the system is mounted for horizontal movement and has a downwardly facing surface at which a vacuum can be drawn to receive and support a glass sheet. The system includes a first actuator that moves the transfer platen horizontally between (a) a receiving position within the furnace above the conveyor from which the downwardly facing surface of the transfer platen receives a heated glass sheet, and (b) a delivery position within the forming station below the upper mold and above the lower mold to deliver the heated glass sheet onto the lower mold. A second actuator of the system moves the upper mold upwardly and downwardly. The second actuator moves the upper mold upwardly so the transfer platen can be moved to the delivery position to deliver the heated glass sheet onto the lower mold. Then, the transfer platen is moved back to the receiving position within the furnace and the second actuator moves the upper mold downwardly to press form the heated glass sheet between the lower and upper molds. Thereafter, the second actuator moves the upper mold upwardly and the upper mold supports the formed glass sheet by vacuum drawn at its downwardly facing full surface forming face. A delivery mold of the system is movable horizontally at an elevation above the elevation of the transfer platen and below the elevation of the upwardly moved upper mold. A third actuator of the system initially moves the delivery mold to the forming station to receive the formed glass sheet from the upwardly moved upper mold and subsequently moves the delivery mold and the formed glass sheet thereon from the forming station for delivery.

The glass sheet forming system as disclosed includes a quench station to which the formed glass sheet is delivered by the delivery mold for quenching.

A lift jet nozzle assembly lifts the heated glass sheet from the conveyor to the downwardly facing surface of the transfer platen.

The downwardly facing surface of the transfer platen has a slight downwardly convex shape and includes a high temperature cloth covering against which the heated glass sheet is supported for its transfer from the furnace to the forming station.

The forming station of the system includes a heated forming chamber in fluid communication with the heating chamber of the furnace.

The glass sheet forming system also includes a lower mold tilt support mechanism.

The system is disclosed as including a controller that controls the movement of the transfer platen and the delivery mold so each are at least partially in the forming station at the same time so one cycle commences within the forming station before the prior cycle is completed to decrease glass sheet forming cycle time. The controller moves the transfer platen into the forming station at least partially below the delivery mold before the delivery mold moves out of the forming station to deliver a formed glass sheet from the prior cycle. Preferably, the controller operates the system so the heated glass sheet is delivered to the lower mold at approximately the same time the delivery mold receives the formed glass sheet processed during the prior cycle. The controller also operates the system so the transfer platen can receive the heated glass sheet from the conveyor while the glass sheet is stationary or while the glass sheet is being conveyed. In addition, the controller operates the system so the full surface upper mold is moved downwardly to deliver the formed glass sheet onto the delivery mold and then moved back upwardly so the delivery mold can be moved from the forming station for delivery.

The lower mold has upper extremities at generally the same elevation, and each upper extremity is located about .2 to 2 centimeters, and preferably about .2 to .6 centimeter, below the glass sheet just before the glass sheet is released from the transfer platen onto the lower mold.

The object of the present invention is to provide an improved method for forming glass sheets.
In carrying out the glass sheet forming method of the immediately preceding object, a glass sheet is conveyed on a horizontal conveyor along a direction of conveyance within a furnace heating chamber for heating to a forming temperature. A transfer platen is positioned within the furnace heating chamber with a downwardly facing surface of the transfer platen above the heated glass sheet on the conveyor and a differential gas pressure is applied to the glass sheet so it is received and supported by the downwardly facing surface of the transfer platen. The transfer platen is then moved horizontally with the heated glass sheet supported thereby from the furnace to a forming station between a lower mold of the ring type and an upper mold having a full surface forming face at which a vacuum can be drawn. The heated glass sheet is delivered from the transfer platen onto the lower mold and the transfer platen is moved from the forming station back to the furnace. The upper mold is moved downwardly to cooperate with the lower mold in press forming the heated glass sheet, a vacuum is drawn at the forming face of the upper mold to support the formed glass sheet, and the upper mold is moved upwardly with the formed glass sheet supported by the upper mold. A delivery mold is supported for horizontal movement at an elevation above the elevation of the transfer platen and below the elevation of the upwardly moved upper mold. The delivery mold is moved horizontally to the forming station below the upper mold and the formed glass sheet is deposited onto the delivery mold which is then moved horizontally from the forming station for delivery of the formed glass sheet.

The formed glass sheet is moved on the delivery mold from the forming station to a quench station for quenching.

Pressurized gas is supplied upwardly from a lift jet nozzle assembly and a vacuum is drawn at the downwardly facing surface of the transfer platen to lift the glass sheet upwardly from the conveyor and provide support thereof by the transfer platen.

The heated glass sheet is received by a high temperature cloth covering of the downwardly facing surface of the transfer platen which has a slight downwardly convex shape.

The lower mold is tilted after receiving the heated glass sheet to facilitate forming and subsequent delivery.

The transfer platen and the delivery mold each are located at least partially in the forming station at the same time in respective underlapping and overlapping relationship to decrease glass sheet forming cycle time.

The objects, features and advantages of the present invention are readily apparent from the following detailed description of the preferred embodiment when taken in connection with the accompanying drawings.

### BRIEF DESCRIPTION OF THE DRAWINGS

FIGURE 1 is a schematic view of a glass sheet forming system to provide the glass sheet forming method in accordance with the invention during operation of the system and is shown at an initial position prior to any glass sheet forming.
FIGURE 2 is a view similar to Figure 1 shown as one glass sheet forming cycle is almost completed and as another forming cycle is commencing.
FIGURE 3 is a view similar to Figure 2 at a later stage after the one glass sheet has been delivered and the other is in the process of being formed and as a third glass sheet is being readied for a further forming cycle.

### DETAILED DESCRIPTION OF THE PREFERRED EMBODIMENT

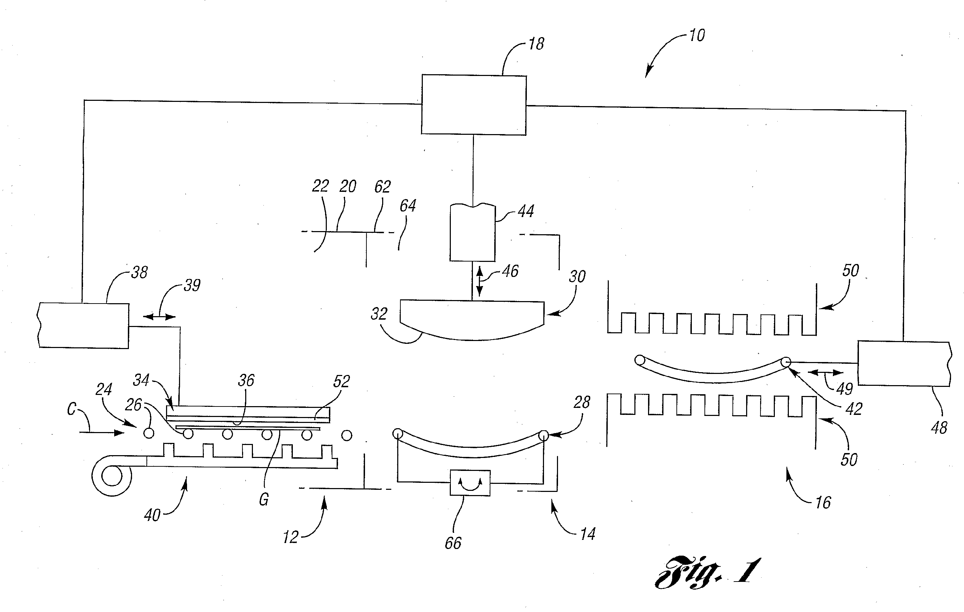

With reference to Figure 1, a glass sheet forming system is generally indicated by 10 and includes a schematically indicated furnace 12, a forming station 14, and a quench station 16 to which the formed glass sheets are delivered. A controller 18 of the system coordinates the operation of the furnace 12, the forming station 14 and the quench 16. The forming system 10 and its method of operation for carrying out the glass sheet forming of the invention are hereinafter described in an integrated manner to facilitate an understanding of all aspects of the invention.

With continued reference to Figure 1, the furnace 12 is of any conventional type including an insulated housing 20 that defines a heating chamber 22 in which a horizontal conveyor, e.g. a roll conveyor 24, is located. The roll conveyor 24 includes conveyor rolls 26 on which glass sheets G are conveyed at spaced intervals in a direction of conveyance as shown by arrow C for heating to a forming temperature.

The forming station 14 of the system 10 cyclically forms heated glass sheets G as is hereinafter more fully described. This forming station 14 includes a lower mold 28 of the ring type and an upper mold 30 having a downwardly facing surface 32 in the form of a downwardly facing full surface forming face that provides a forming face at which a vacuum can be drawn as is hereinafter more fully described.

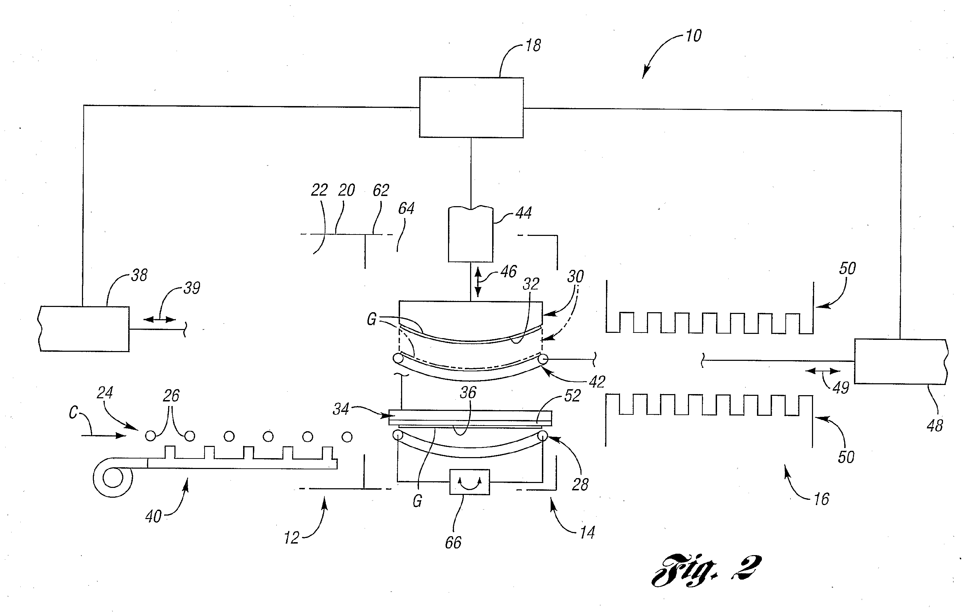

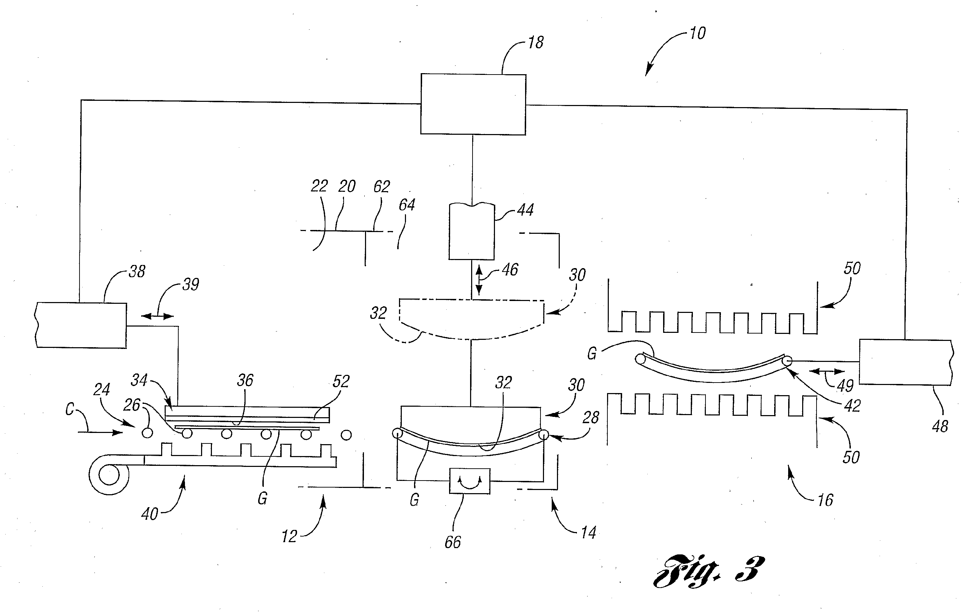

A transfer platen 34 of the system 10 is mounted for horizontal movement and has a downwardly facing surface 36 at which a vacuum is drawn to receive and support a heated glass sheet. A first actuator 38 of the system moves the transfer platen 34 horizontally as shown by arrows 39 between a receiving position within the furnace 12 as shown in Figure 1 and a delivery position within the forming station 14 as shown in Figure 2. The transfer platen 34 when located by actuator 38 in the receiving position of Figure 1 receives a heated glass sheet G from the conveyor by a differential gas pressure applied to the glass sheet. More specifically, a vacuum is drawn at the downwardly facing surface 36 of the transfer platen 34 and a lift jet nozzle assembly 40 can be utilized to provide an upward gas flow so that the glass sheet G is transferred upwardly from the roll conveyor 24 into supported contact with the downwardly facing surface of the transfer platen. The first actuator 38 then moves the transfer platen 34 and the glass sheet G supported thereby from the receiving position of Figure 1 within the furnace 12 to the delivery position of Figure 2 within the forming station 14 above the lower mold 28 and below the upper mold 30. The vacuum platen 34 then delivers the flat glass sheet G onto the lower mold 28 to commence the forming. Transfer platen 34 is then moved by the first actuator 38 back to the receiving position within the furnace as shown in Figure 1 and a delivery mold 42 is moved horizontally from the forming station 14 as shown in Figure 2 to the quench station 16 as shown in Figure 3. This movement of the delivery mold 42 delivers a previously formed glass sheet, as is hereinafter more fully described, so that the forming of the next glass sheet G can proceed as shown in Figure 3. More specifically, a second actuator 44 of the system moves the upper mold 30 upwardly and downwardly as shown by arrows 46. The upper mold 30 is moved upwardly to the position of Figure 2 so the glass sheet can be received from the transfer platen 34 by the lower mold 28 and is moved downwardly from the higher phantom line position of Figure 3 to the lower solid line position to press form the glass sheet between the lower and upper molds. A vacuum is drawn at the lower surface 32 (i.e. the downwardly facing full surface forming face) of the upper mold 30 to support the glass sheet G on the upper mold, and the second actuator 44 moves the upper mold upwardly to the Figure 2 position in preparation for delivery of the formed glass sheet and commencement of the next cycle by delivery of the next glass sheet to the lower mold as described above. The vacuum drawn at the upper mold lower surface 32 can also assist in the press forming of the glass sheet between the molds.

As shown in Figures 2 and 3, the delivery mold 42 is moved horizontally by a third actuator 48 as shown by arrows 49 between the forming station 14 and the quench station 16. In the forming station 14, the delivery mold 42 receives the formed glass sheet from the upper mold 30 upon reduction or complete termination of its vacuum. Furthermore, the upper mold 30 can be moved downwardly as shown by phantom line representation in Figure 2 closer to the delivery mold 42 so that the formed glass sheet only drops a small distance as it is received by the delivery mold from the upper mold. Thereafter, the upper mold 30 is moved upwardly and the delivery mold 42 is moved from the forming station 14 to the quench station 16 between lower and upper quench heads 50 that supply quenching air for rapid cooling of the glass sheet for tempering or heat strengthening. It should be appreciated that the delivery mold can also be used to provide delivery of the formed glass sheet for annealing when annealed formed glass is to be produced.

Both the vacuum platen 34 and the upper mold 30 can be initially supplied with a greater vacuum that is then reduced to prevent undesired deformation of the glass sheet, and further vacuum reduction or complete termination of the vacuum then releases the glass sheet. Furthermore, it is also possible for the transfer platen 34 and the upper mold 30 to be supplied with positive pressure gas to release the glass sheet therefrom during the processing as described above.

As shown in Figure 2, the delivery mold 42 is movable at an elevation above the elevation of the transfer platen 34 and below the elevation of the upwardly moved upper mold 30 so both the transfer platen and the delivery mold can be located in the forming station at the same time in respective undeiiapping and overlapping relationships to each other at least partially or fully to decrease glass sheet forming cycle time. More specifically, successive glass sheet forming cycles can be performed within forming station 14 in a time overlapping manner due to the support and movement of the transfer platen 34 and delivery mold 42 at different elevations so they do not interfere or obstruct each other and can thus be at least partially or fully aligned in their respective underlapping and overlapping relationships to each other. Thus, one forming cycle can start in the forming station before the prior cycle is completed to thereby decrease the cycle time of the system. As shown in Figure 2, controller 18 operates the system so the next glass sheet G to be formed is received by the lower mold 28 from the transfer platen 34 at approximately the same time the previously formed glass sheet G is delivered from the upper mold 30 to the delivery mold 42. In many applications, both transfers will not take place at the same time, but both the transfer platen 34 and the delivery mold 42 will be at least partially within the forming station 14 at the same time with the transfer platen at least partially below the delivery mold and with the delivery mold at least partially above the transfer platen in a manner that decreases the forming cycle time as compared to systems wherein each cycle has to be fully completed within the forming station before the next cycle can start because the molds interfere and obstruct each other.

The downwardly facing surface 36 of the transfer platen 34 may be flat but preferably has a slight downwardly convex shape. More specifically, the downwardly facing surface 36 may have a relatively large radius of curvature such that a glass sheet having a length of about 1.5 meters will have its central location displaced downwardly by about 2 centimeters from a straight line through its ends.

A covering 52 of a high temperature cloth, that may be knit, woven or felt and made from fiberglass or stainless steel, is clamped at its periphery or otherwise secured to cover the downwardly facing surface 36, and this covering does not sag downwardly from the surface due to its downwardly convex shape. The slight downwardly convex shape of the transfer platen surface 36 eliminates the necessity to bond a mold covering to the platen surface and the consequent cost and fabrication time. Such mold coverings protect the heated glass sheets from marking or other distortions during the processing. Also, the downwardly convex shape of the platen surface 36 is preferably cylindrical as opposed to curvatures in transverse directions. More specifically the cylindrical downwardly convex shape provides a lower extremity as a line, as opposed to transverse curvatures that provide a point, and thereby reduces the pressure applied to the glass sheet and consequent deformation upon pickup from the conveyor.

As shown in Figures 1-3, the forming station 14 includes a schematically indicated insulated housing 62 that defines a heated forming chamber 64 that is in fluid communication with the furnace heating chamber 22. The forming station 14 may be manufactured as a separate unit whose forming chamber 64 is in fluid communication with the downstream end of the furnace housing 20 or may be manufactured as part of the downstream end of the furnace. Also, the lower and upper molds 28 and 30 may have a major curvature in one direction and a minor curvature in a transverse direction to the major curvature, and the major curvature can be transverse to the direction of conveyance C instead of along the direction of conveyance as shown. In addition, while the forming station 14 and quench station 16 are shown as being aligned along the direction of conveyance C, it is also possible for the forming station and/or the quench station to be located to one lateral side of the system so that the glass sheet executes a 90 degree turn during its processing. As previously mentioned, it is also possible for the system to be utilized to provide glass sheet annealing.

As shown in Figures 1-3, the lower mold 28 of the forming station 14 includes a tilt mechanism 66 which allows the lower mold to be tilted after receiving the heated glass sheet. The glass sheet is initially dropped onto the upper extremities of the lower mold with generally the same drop height at each upper extremity. The lower mold with the glass sheet thereon is then tilted and the glass sheet is formed between the molds in its tilted attitude. Thereafter, the formed glass sheet is eventually deposited onto the delivery mold which can move the glass sheet into a quench station having curved quench heads spaced closer than is possible without the glass sheet tilting from its initial attitude. Also, the upper extremities of the lower mold 28 are at generally the same elevation, and each upper extremity is located no less than about .2 centimeter and not more than about 2 centimeters, and preferably no more than about .6 centimeter, below the glass sheet G just before the glass sheet is released from the transfer platen 34 onto the lower mold.

Controller 18 can also operate the system so that the first actuator 38 operates the transfer platen 34 so that it receives the heated glass sheet G from the roll conveyor 24 while the glass sheet is stationary or while the glass sheet is being conveyed.

It is also possible for the transfer platen 34 to be moved downwardly a slight extent at its opposite extremes of travel within the furnace 12 and the forming station 14. Such downward movement positions the transfer platen 34 closer to the roll conveyor 24 to facilitate the initial transfer of the glass sheet to the transfer platen in the furnace. In the forming station 14, the downward movement reduces the drop height of the glass sheet from the transfer platen 34 to the lower mold 28.

While the preferred embodiment of the invention has been illustrated and described, it is not intended that this embodiment illustrates and describes all possible forms of the invention. Rather, the words used in the specification are words of description rather than limitation, and it is understood that various changes may be made without departing from the scope of the invention as defined by the following claims.

## Claims

1. A method for forming glass sheets (G) comprising:
conveying a glass sheet (G) on a horizontal conveyor (24) along a direction of conveyance (C) within a furnace heating chamber (22) of a furnace (12) for heating to a forming temperature;
positioning a transfer platen (34) in a receiving position within the furnace heating chamber (22) with a downwardly facing surface (36) of the transfer platen (34) above the heated glass sheet (G) on the conveyor (14) and applying a differential gas pressure to the downwardly facing surface (36) thereof so the glass sheet (G) is received and supported by the downwardly facing surface (36) of the transfer platen (34);
moving the transfer platen (34) horizontally with the heated glass sheet (G) supported thereby from the furnace (12) to a delivery position in the forming station (14) between a lower mold (28) of the ring type and an upper mold (30) having a full surface forming face (32) at which a vacuum can be drawn;
delivering the heated glass sheet (G) from the transfer platen (34) onto the lower mold (28) and moving the transfer platen (34) from the forming station (14) back to the furnace (12);
moving the upper mold (30) downwardly to cooperate with the lower mold (28) in press forming the heated glass sheet (G), drawing a vacuum at the forming face (32) of the upper mold (30) to support the formed glass sheet (G), and moving the upper mold (30) upwardly with the formed glass sheet (G) supported thereby;
supporting a delivery mold (42) for horizontal movement at an elevation above an elevation of the transfer platen (34) and below an elevation of the upwardly moved upper mold (30);
moving the delivery mold (42) horizontally to the forming station (14) below the upper mold (30) and depositing the formed glass sheet (G) onto the delivery mold (42), and then moving the delivery mold (42) horizontally from the forming station (14) with the formed glass sheet (G) thereon for delivery; and
wherein the transfer platen (34) and the delivery mold (42) each are located at least partially in the forming station (14) at the same time in respective underlapping and overlapping relationships to decrease glass sheet forming cycle time.

2. A method for forming glass sheets (G) as in claim 1 wherein the formed glass sheet (G) is moved on the delivery mold (42) from the forming station (14) to a quench station (16) for quenching.

3. A method for forming glass sheets (G) as in claim 1 wherein pressurized gas is supplied upwardly from a lift jet nozzle assembly (40) and a vacuum is drawn at the downwardly facing surface (36) of the transfer platen (34) to lift the glass sheet (G) upwardly from the conveyor (24) and provide support thereof by the transfer platen (34).

4. A method for forming glass sheets (G) as in claim 1 wherein the heated glass sheet (G) is received by a high temperature cloth (52) covering on the downwardly facing surface (36) of the transfer platen (34) which has a slight downwardly convex shape.

5. A method for forming glass sheets (G) as in claim 1 wherein the lower mold (28) is tilted after receiving the heated glass sheet (G) to facilitate further processing.

## Patentansprüche

1. Verfahren zum Formen von Glasscheiben (G), das Folgendes beinhaltet:
Befördern einer Glasscheibe (G) auf einem Horizontalförderer (24) entlang einer Förderrichtung (C) innerhalb einer Ofenerwärmungskammer (22) eines Ofens (12) zum Erwärmen auf eine Formtemperatur;
Positionieren einer Transferplatte (34) in eine Aufnahmeposition innerhalb der Ofenerwärmungskammer (22) mit einer nach unten gewandten Oberfläche (36) der Transferplatte (34) oberhalb der erwärmten Glasscheibe (G) auf dem Förderer (14) und Anwenden eines Differenzialgasdrucks an die nach unten gewandte Oberfläche (36) davon, sodass die Glasscheibe (G) von der nach unten gewandten Oberfläche (36) der Transferplatte (34) aufgenommen und gestützt wird;
Bewegen der Transferplatte (34) horizontal mit der von dieser gestützten erwärmten Glasscheibe (G) aus dem Ofen (12) an eine Lieferungsposition in der Formstation (14) zwischen einer unteren Matrize (28) des Ringtyps und einer oberen Matrize (30), die eine vollständige Oberflächenformfläche (32) aufweist, an der ein Vakuum gezogen werden kann;
Liefern der erwärmten Glasscheibe (G) von der Transferplatte (34) auf die untere Matrize (28) und Bewegen der Transferplatte (34) von der Formstation (14) zurück an den Ofen (12);
Bewegen der oberen Matrize (30) nach unten, um mit der unteren Matrize (28) beim Pressformen der erwärmten Glasscheibe (G) zusammenzuwirken, Ziehen eines Vakuums an der Formfläche (32) der oberen Matrize (30), um die geformte Glasscheibe (G) zu stützen, und Bewegen der oberen Matrize (30) mit der durch diese gestützten geformten Glasscheibe (G) nach oben;
Stützen einer Lieferungsmatrize (42) zur horizontalen Bewegung an einer Höhenlage oberhalb einer Höhenlage der Transferplatte (34) und unterhalb einer Höhenlage der nach oben bewegten oberen Matrize (30);
Bewegen der Lieferungsmatrize (42) horizontal an die Formstation (14) unterhalb der oberen Matrize (30) und Ablagern der geformten Glasscheibe (G) auf die Lieferungsmatrize (42), und dann Bewegen der Lieferungsmatrize (42) horizontal aus der Formstation (14) mit der geformten Glasscheibe (G) darauf zur Lieferung; und
wobei sich die Transferplatte (34) und die Lieferungsmatrize (42) jeweils mindestens teilweise gleichzeitig in jeweiligen Unterlappungs- und Überlappungsbeziehungen in der Formstation (14) befinden, um die Glasscheibenformzykluszeit zu verringern.

2. Verfahren zum Formen von Glasscheiben (G) gemäß Anspruch 1, wobei die geformte Glasscheibe (G) auf der Lieferungsmatrize (42) aus der Formstation (14) an eine Quenchstation (16) zum Quenchen bewegt wird.

3. Verfahren zum Formen von Glasscheiben (G) gemäß Anspruch 1, wobei Druckgas von einer Hubstrahldüsenanordnung (40) nach oben zugeführt wird und ein Vakuum an der nach unten gewandten Oberfläche (36) der Transferplatte (34) gezogen wird, um die Glasscheibe (G) von dem Förderer (24) nach oben zu heben und Stützung davon von der Transferplatte (34) bereitzustellen.

4. Verfahren zum Formen von Glasscheiben (G) gemäß Anspruch 1, wobei die erwärmte Glasscheibe (G) von einer Hochtemperaturtuchabdeckung (52) auf der nach unten gewandten Oberfläche (36) der Transferplatte (34) aufgenommen wird, welche eine leicht konvexe Form nach unten aufweist.

5. Verfahren zum Formen von Glasscheiben (G) gemäß Anspruch 1, wobei die untere Matrize (28) nach dem Aufnehmen der erwärmten Glasscheibe (G) geneigt wird, um eine weitere Verarbeitung zu erleichtern.

## Revendications

1. Procédé de formage de feuilles de verre (G) comprenant :
le transport d'une feuille de verre (G) sur un transporteur horizontal (24) le long d'une direction de transport (C) à l'intérieur d'une chambre de chauffe de four (22) d'un four (12) pour chauffer jusqu'à une température de formage ;
le positionnement d'un plateau de transfert (34) dans une position de réception à l'intérieur de la chambre de chauffe du four (22) avec une surface orientée vers le bas (36) du plateau de transfert (34) au-dessus de la feuille de verre chauffée (G) sur le transporteur (14) et l'application d'une pression de gaz différentielle sur la surface orientée vers le bas (36) de celui-ci de manière à ce que la feuille de verre (G) soit reçue et supportée par la surface orientée vers le bas (36) du plateau de transfert (34) ;
le déplacement du plateau de transfert (34) horizontalement avec la feuille de verre chauffée (G) supportée ainsi depuis le four (12) jusqu'à une position de livraison dans le poste de formage (14) entre un moule inférieur (28) du type anneau et un moule supérieur (30) ayant une face de formage de surface complète (32) au niveau de laquelle un vide peut être aspiré ;
la livraison de la feuille de verre chauffée (G) depuis le plateau de transfert (34) sur le moule inférieur (28) et le déplacement du plateau de transfert (34) depuis le poste de formage (14) pour retourner jusqu'au four (12) ;
le déplacement du moule supérieur (30) vers le bas pour coopérer avec le moule inférieur (28) lors du formage sous pression de la feuille de verre chauffée (G), l'aspiration d'un vide au niveau de la face de formage (32) du moule supérieur (30) pour supporter la feuille de verre formée (G), et le déplacement du moule supérieur (30) vers le haut avec la feuille de verre formée (G) supportée ainsi ;
le support d'un moule de livraison (42) pour un mouvement horizontal à une élévation au-dessus d'une élévation du plateau de transfert (34) et en dessous d'une élévation du moule supérieur déplacé vers le haut (30) ;
le déplacement du moule de livraison (42) horizontalement jusqu'au poste de formage (14) en dessous du moule supérieur (30) et le dépôt de la feuille de verre formée (G) sur le moule de livraison (42), puis le déplacement du moule de livraison (42) horizontalement depuis le poste de formage (14) avec la feuille de verre formée (G) sur celui-ci pour la livraison ; et
le plateau de transfert (34) et le moule de livraison (42) étant chacun situés au moins partiellement dans le poste de formage (14) en même temps dans des rapports respectifs de recouvrement au-dessus et en dessous pour diminuer la durée du cycle de formage de feuilles de verre.

2. Procédé de formage de feuilles de verre (G) selon la revendication 1, dans lequel la feuille de verre formée (G) est déplacée sur le moule de livraison (42) du poste de formage (14) à un poste de trempe (16) pour la trempe.

3. Procédé de formage de feuilles de verre (G) selon la revendication 1, dans lequel du gaz pressurisé est alimenté vers le haut depuis un ensemble buse à jet de sustentation (40) et un vide est aspiré au niveau de la surface orientée vers le bas (36) du plateau de transfert (34) pour soulever la feuille de verre (G) vers le haut depuis le transporteur (24) et pour fournir le support de celle-ci par le plateau de transfert (34).

4. Procédé de formage de feuilles de verre (G) selon la revendication 1, dans lequel la feuille de verre chauffée (G) est reçue par un revêtement en étoffe à haute température (52) sur la surface orientée vers le bas (36) du plateau de transfert (34) qui a une forme légèrement convexe vers le bas.

5. Procédé de formage de feuilles de verre (G) selon la revendication 1 dans lequel le moule inférieur (28) est incliné après avoir reçu la feuille de verre chauffée (G) afin de faciliter le traitement ultérieur.
